(19) Europäisches Patentamt
European Patent Office
Office européen des brevets

(11) **EP 3 340 151 A1**

(12) **EUROPEAN PATENT APPLICATION**

(43) Date of publication:
**27.06.2018 Bulletin 2018/26**

(51) Int Cl.:
***G06Q 30/02*** *(2012.01)*

(21) Application number: **16206672.4**

(22) Date of filing: **23.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Techno Design S.r.l.**
**84091 Battipaglia (SA) (IT)**

(72) Inventors:
- LONGO, Donato
  **84091 Battipaglia (SA) (IT)**
- MAINARDI, Luigi
  **84091 Battipaglia (SA) (IT)**

(74) Representative: **Conversano, Gabriele**
**Laforgia, Bruni & Partners srl**
**Via Michele Garruba, 3**
**70122 Bari (IT)**

(54) **METHOD FOR COLLECTION, INTEGRATION AND AUTOMATIC ANALYSIS OF POST-SALES DATA COMING FROM VARIOUS SOURCES**

(57) Method for collection, integration and automatic analysis of post-sales data coming from various sources, comprising the following steps of:
1) acquiring data from various sources;
2) inputting said data acquired at point 1 in a database;
3) classifying data by means of semantic analysis; characterized in that the treated data comprise opinions expressed by customers in form of free text strings, in that said classification comprises the step of subdividing said free text strings in a vector of text elements of smaller dimensions and in that each vector of text elements is analyzed by means of semantic analysis algorithms, thus determining the presence of complaints of customers and/or reports of faults concerning one or more technical features of the product, and is classified in the following according to the technical features the product is referred to.

Fig. 2

EP 3 340 151 A1

**Description**

Field of the invention

The present invention relates to a method for collection and automatic analysis of data concerning the reputation of products according to opinions expressed by users.

Today, information shared through the various mass media is always as much increasing that science has defined a new special research field, called Big Data Analytics. Rating the reputation of products can be considered, to all intents and purposes, as an element belonging to the Big Data Analytics discipline.

State of the art

Both Business Intelligence and Semantic Analysis represent research and development fields known in the scientific world and in the industrial one as well, with a constant proliferation of solutions in each one of both fields and also of transversal solutions for covering both the aspects.

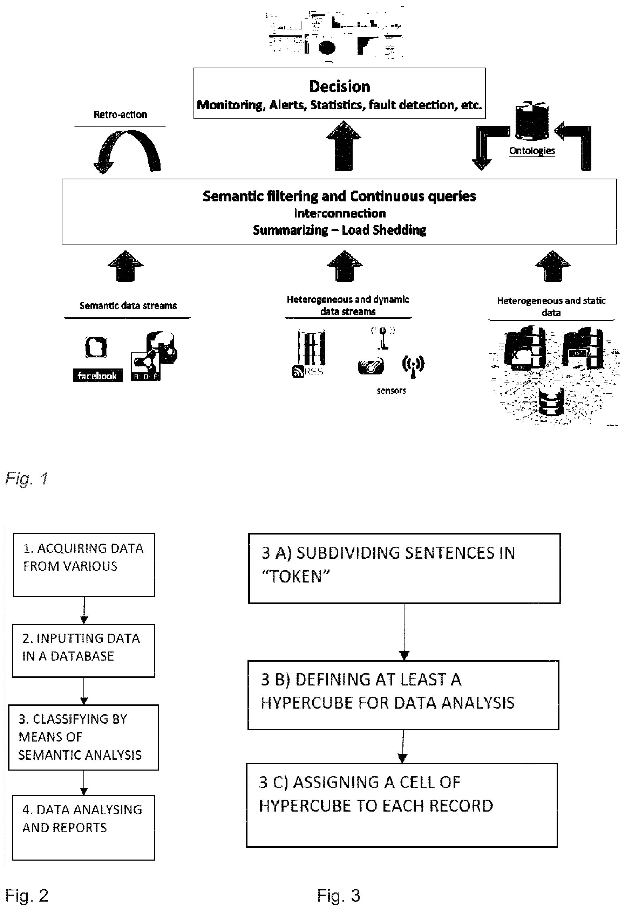

The scientific community, also with very recent publications ("From Business Intelligence to semantic data stream management" Marie-Aude Aufaure, Raja Chiky, Olivier Cur, Houda Khrouf, Gabriel Kepeklian, Future Generation Computer Systems 63 (2016) 100-107) has stated once again the strategic importance of integrating the two disciplines. Figure 1, extracted by the cited article, represents well the opportunity that such an integration allows to be taken, defining an integrated architecture of the semantic analysis and business intelligence disciplines.

There are many companies which provide Out Of The Box technologies concerning both aspects. There are few companies instead, also of great dimensions (global), offering integrated solutions of the two aspects in Out Of The Box mode. One example thereof is SAP multinational company which provides to its customers a solution called "Semantic Layer", which is able to provide semantic analysis functions of company data concerning the inner functions of finances, sales, budget etc.

Anyway, the cited example refers to a semantic analysis applied to a pre-organized database which is effectively yet part of the system managed by the Software Vendor. It is actually an add-on for the semantic analysis of data yet managed by the system, which does not allow anyway an automatic and effective integration of heterogeneous sources of data.

Aim of the present invention is instead to provide a method for analysis of opinions of users in order to rate the reputation of a product, which allows the integration of data coming from heterogeneous sources and which allows to classify automatically said opinions according to both the surrounding conditions and the data concerning the product.

The proposed method is actually a method for collection, integration and automatic analysis of post-sales data coming from various sources, comprising the following steps of:

1) acquiring data from various sources;
2) inputting said data acquired at point 1 in a database;
3) classifying data by means of semantic analysis; characterized in that the treated data comprise opinions expressed by customers in form of free text strings, in that said classification comprises the step of subdividing said free text strings in a vector of text elements of smaller dimensions and in that each vector of text elements is analyzed by means of semantic analysis algorithms, thus determining the presence of complaints of customers and/or reports of faults concerning one or more technical features of the product, and is classified in the following according to the technical features the product is referred to.

In particular, the object of the present invention provides a method for collection, integration and analysis of post-sales data coming form various sources.

Firstly, it is to be said that even if the method is described in the following also with reference to the analysis of data of products of the automotive field, the method can be generally applied, and can be applied to products coming from completely different fields.

Furthermore, it is to be specified that, for clear computational needs, the method can be carried out only if it is implemented in a computer, and therefore, also where it is not explicitly specified in the following, it is to be intended that the method described is implemented in a computer.

Referring now to the description of a preferred embodiment of the method according to the invention, with reference to the appended figure 2, it can be noted that the method for automatic analysis and classification of customers' opinions according to the present invention comprises four steps:

1) acquiring data from various sources;
2) inputting data in a database;

3) classifying data by means of semantic analysis;
4) classified data analyzing and possible reports.

With reference to the first step, the data treated are the opinions of customers, expressed by using the language used by customers and so, without linguistic constraints and without using technical terms or a particular vocabulary.

A first source of opinions can be constituted by post-sales phone interviews, carried out preferably after that sufficient time has elapsed from the purchase, so that the customer can express his own opinion; a second source of opinions can be constituted by the opinions expressed by customers on social networks; a third source of opinions can be constituted by reports of automobile repair shops drew up after products failures. This last source of data is particularly important in the automotive field. When in fact the treated product is a car, all failures and faults are managed by automobile repair shops.

The sources of information are enlisted in the following:

- post-sale phone interview: an agent calls the customer after the purchase of a vehicle, after that a sufficient period of time has elapsed during which the customer is able to express its perception of the product. The outcome of the interview is recorded through a form at agent's disposal, so that the words used by the customer are traced as much as possible. As it will be clarified in the following, the system is able to detect automatically if a complaint is present in the opinion expressed by the customer, concerning one or more technical features of the product. This kind of customer feedback is called "complained". A complained does not necessarily constitute an objective fault of the product, it is rather the expression of the user's perception of it. For example, the idea of comfort concerning the accessibility to commands in the dashboard is strongly linked both to the vehicle possibility of configuration and the anthropomorphic features of the customer as compared to the population average: customers belonging to the most extreme percentiles of the descriptive curve of population (particularly tall or particularly short) will more probably report complained about ergonomic conditions.

- Report of failure repair in automobile repair shops: the customer, who has noticed a fault, goes to an authorized repair shop to carry out the repair under warranty. The repair shop technician records the failure repair report, paying attention to report also information about wear of the vehicle, in terms of kilometers driven and general conditions of the vehicle. Said report is called fault.

- Another potential source of information can be represented by the social channels where the product brand is present with dedicated areas.

The data acquired from the just described sources are collected in a database of the company. In this database, both data concerning the opinion of the customer (which, as yet said, is expressed as a free text strings which reflects what the customer has said as much as possible) and data concerning the object bought by the customer are input. In the automotive field, for example, the important data of the object bought by the customer are car model, engine type, kilometers driven. Further data concerning the collected opinion, such for example the date when the opinion was expressed and the geographical area of origin are also collected.

In case the source of data is a report of automobile repair shop, the opinion of the customer expressed as free text can also not be provided. Once the just described data are collected in a database, it is possible to classify them by means of semantic analysis.

With reference to the appended figure 3, the first step needed to get such a classification is the subdivision of the free text strings concerning the opinions in a vector of text elements of smaller dimensions (words or sentences). This subdivision can be carried out according to one or more subdivision algorithms (or also "tokenization" algorithms in the following).

The Tokenizer (software which carries out the subdivision of simple text strings in elements of smaller dimensions) has the task to subdivide a part of text in input in a vector of smaller elements, which can be sentences or words.

Some usable algorithms are enlisted in the following:

- StringTokenizer: given an input text, the algorithm gives back the vector of the words making up it, considering punctuation marks and spaces as separators;
- TweetTokenizer: it is a tokenizer made up of a series of heuristics able to process a text coming from Twitter®, thus comprising characters as well typically used in that context, very often representatives of emoticons (:) :P, etc. In a reputation analysis, emoticons are essential elements to determine the positive or negative meaning of a statement.
- PunktTokenizer: it is a tokenizer able to distinguish between the punctuation marks used to shorten a word (for example: "St." or "Mr.") and those used as punctuation marks to separate or end sentences.

Regardless of the algorithm used, the step of "tokenization" (or text subdivision) gives back a vector of text elements.

Since the aim of the method is to be able to trace quantitatively and objectively comments and opinions expressed by a plurality of customers with reference to a plurality of technical features of an object, at this point it is needed to classify each vector given back from the subdivision step of the text for logically homogeneous classes.

With reference to the automotive field, the classification can be made for example for: vehicle model and engine type, geographical area of origin, month when the opinion was collected, component concerned.

It is in fact a classification by many dimensions. It is also to be considered that many possible classes are comprised in some of these dimensions. For example, the number of possible ergonomic components is about 150, and it is variable for vehicle type.

Classifying a vector given back from the tokenization according to this logic means actually to associate to said vector a class for each classification dimension (associating for example a component, a car model or engine type, a year and a month, a city to said vector).

To carry out this classification, preferably, the method according to the present invention uses a probabilistic classifier, according to what described in the following. The classifier used by the system described in the Naive Bayes classifier. In machine learning, Naive Bayer classifiers are a family of probabilistic classifiers which apply Bayes' theorem, with strong independence assumptions between the features:

$$P(A|B) = \frac{P(B|A)P(A)}{P(B)}$$

where:

- P(A/B) is the probability to observe the event A, the event B being true;
- P (A) and P (B) are the probabilities to observe events A and B as not related, respectively;
- P(B/A) is the probability to observe the event B, the event A being true.

Generally, the model based on Naive Bayes is a conditional probability model: given a problem instance to be classified, represented by the vector $x=(x\_1,...,x\_n)$ representing n features (independent variables), it assigns to this instance probabilities

$$p(C_k|x_1, \ldots, x_n)$$

for each of K possible outcomes or classes Ck.

The problem in implementing the just described formulation is that if the number of features n is large, or if each feature can take on a large number of possible outcomes, then basing such a model on probability tables becomes unfeasible. The problem of classification is then reformulated, using Bayes' theorem, and the conditional probability is expressed as:

$$p(C_k|x) = \frac{p(C_k)p(x|Ck)}{p(x)}$$

i.e.

$$\texttt{posterior = (prior x likelihood)/evidence}$$

In practice, there is interest only in the numerator of the fraction, because the denominator does not depend on the class C and the values of the features are given, so the denominator is effectively a constant. The numerator is equivalent to the joint probability model:

$$p(C_k, x_1, \ldots, x_n)$$

Now, the conditional independence assumption comes into play: it is assumed that each features Fi is conditionally independent of every other feature Fj for j other than I, given the category C.

This implies that above independence assumptions, the conditional distribution over the class variable C is:

$$p(C_k, x_1, \ldots, x_n) = p(x_i | C_k)$$

where the evidence $Z=p(x)$ is a scaling factor dependent only on $x_1,\ldots,x_n$, i.e. a constant if the values of the feature variables are given.

The Naive Bayes classifier combines the probabilistic model, as described, with a decision rule. One common rule is to pick the most probable hypothesis, known as MAP rule or maximum a posteriori. Hence the resulting classifier assigning the label y is:

$$\hat{y} = \underset{k \in \{1,\ldots,K\}}{\operatorname{argmax}} p(C_k) \prod_{i=1}^{n} p(x_i | C_k)$$

The system, object of the invention, applies the classifier so that the ergonomic component is determined, which is more probably referred to in the text used by the customer to express his/her opinion. It is to be considered that the number of possible ergonomic components is about 150, and varies according to the type of vehicle.

To improve the computational performance of the method, the classes of ergonomic components and functional components associated to each opinion are structured in a three level hierarchy;

Class; area; ergonomic/functional component.

This categorization allows to cluster the components and to classify features in three steps, associating the opinion to a class first, to an area comprised in the class then, and finally, to a functional ergonomic component in the selected area.

As previously stated, the three level method simplifies the classification, reducing the number of classes to be chosen among in each step up to a maximum of 30, and improving the classifier performance both in terms of operation time and reliability.

Hence, very briefly, the method according to the present invention transforms the initial data so that they are compatible to the inner data structures and analyses the text of interviews and complained expressed by customers by carrying out a semantic analysis thereof.

As a result, the system is able to analyse the opinions expressed by customers and to classify:

    a. faults, ascribing them to a specific component or a specific function of the vehicle (for example friction malfunctioning, satellite navigation system malfunctioning etc.);
    b. complained, ascribing them to a specific ergonomic feature of the vehicle (for example: rear window visibility, accessibility to dashboard commands etc.).

Obviously, a complained or fault will not be associated to all the opinions expressed, since the opinions can be also positive.

The vehicle models, object of the analysis, are known to the system implementing the method through two kinds of information:

- the distinct base of components: list of the codes individuating univocally a functional component of the vehicle;
- a distinct base of ergonomic features: list of codes individuating univocally an ergonomic area of the vehicle;
- an example of database used to train the semantic analysis engine (a list of records of characteristic sentences of each functional component and each ergonomic area).

It is to be considered that, now, the association of complained and faults to a component or ergonomic area is carried out manually by dedicated technical staff, and so it is strongly dependent on the skills of each operator to extract the correct quantity data from the text reported by the users, besides the skills of the operators involved to maintain unchanged in time the attention and objectivity level concerning what they are observing. The system overcomes the problem of repeatability and operators expertise dependence. Hence, the system relates information extracted by means of semantic analysis and classification to the surrounding conditions - i.e. the metadata accompanying the reports on complained and faults. This correlation allows for example to highlight the concentration of detections of a particular kind of fault with a specific geographical area of origin, or with a specific period of the year and allows the manufacturer to individuate the representative cases of usage of the critical working conditions of a particular component, detected directly on the field.

Finally, through the analysis of the qualitative data expressed by customers and repair shops in form of complex texts, using a language far from the technical vocabulary peculiar to the automotive field, the method according to the present invention is able to interpret stably and efficiently complained and faults, referring them to a specific component or a specific function of the product and translating them consequently in quantitative data, for this reason simply clusterable and analysable.

The main system components in a preferred software implementation are enlisted in the following:

- complained repository
- faults repository
- databases of domain ontologies
- training repository
- Mondrian engine of OLAP database (OnLine Analytical Processing)
- NLTK libraries (Natural Language Toolkit)
- Application Server Apache-Tomcat
- libraries for generating Birt reports Databases

The system uses MySQL relational database to store data coming from the acquiring streams of complained and faults and those retrieved from the company knowhow, i.e. the domain ontologies which will be used by the classifier to organize snippets. There are also provided the data used for training of the engine of semantic analysis.

OLAP database

Classes are organized in the OLAP database model and related to metadata accompanying the original snippets. At this point the information is clustered with respect to the company dimensions and can be analysed using the acquired techniques of Business Intelligence of slicing and dicing or drill down and drill through.

The system is provided with a hypercube for the analysis of complained and another one for the analysis of faults. Preferably each cube is made up of four dimensions, each one clustered on three levels and four dimensions.

Dimensions:

- brand - model - engine type: vehicles are distinguished by engine type at the lowest detail level, so clustered for model and brand;
- class - area - component: complained and faults are subdivided in components, then clustered as areas and classes;
- region - province - city: since the data come from the Italian territory, the geographical localization is clustered for province and region;
- year - semester - month: this dimension traces the time organization of complained and faults and is clustered for semester and year.

Therefore, each record is in a cell of the cube with coordinates of dimensions equal to the metadata accompanying the record.

Among the various quantitative measures which can be extracted, for the analysis of the customer's satisfaction, there is interest in:

- R/100: percentage of complained/faults generically referred to as "detections" (R), standardized to the number of interviews detected in the period;
- GRAV: seriousness of detections on a scale of integers 1 to 5, where 1 stands for not serious and 5 for very serious, and preferably, the value of seriousness is associated to the faults and complained by an operator;

- kilometres driven: wear of the vehicle when the problem arises;
- total kilometres: wear of the vehicle at detection.

**Claims**

1. Method for collection, integration and automatic analysis of post-sales data coming from various sources, comprising the following steps of:

1) acquiring data from various sources;
2) inputting said data acquired at point 1 in a database;
3) classifying data by means of semantic analysis; **characterized in that**

the treated data comprise opinions expressed by customers in form of free text strings,
**in that**
said classification comprises the step of subdividing said free text strings in a vector of text elements of smaller dimensions,
and **in that**
each vector of text elements is analyzed by means of semantic analysis algorithms, thus determining the presence of complaints of customers and/or reports of faults concerning one or more technical features of the product, and is classified in the following according to the technical features the product is referred to.

2. Method for collection, integration and automatic analysis of post-sales data according to claim 1, **characterized in that** said classification is carried out by means of a Naive Bayes' model, by assigning said vector of text to the class to which the Naive Bayes' classifier associates the highest probability.

3. Method for collection, integration and automatic analysis of post-sales data according to claim 2, **characterized in that** the classes of ergonomic components and functional components to which an opinion can be associated, are structured in a three level hierarchy: class; area; ergonomic/functional component.

4. Method according to any one the preceding claims, **characterized in that** said product is a vehicle, and to each vector of text data concerning brand, model, kilometres driven and geographical area of origin are also associated.

5. Method according to claim 4, **characterized in that** the classes in which each vector can be classified are organized in a OLAP database model.

6. Method according to claim 5, **characterized in that** data are organized in two hyper-cubes, the one for data concerning opinions expressing complaints and the other one for data concerning opinions expressing faults and **in that** each one of said hyper-cubes is made up of four dimensions, each one clustered on three levels and four dimensions.

7. Method according to claim 6, further comprising the steps of:

- associating a seriousness index 1 to 5 to each opinion expressing a complaint or a fault.

**Decision**
**Monitoring, Alerts, Statistics, fault detection, etc.**

Retro-action

Ontologies

**Semantic filtering and Continuous queries**
**Interconnection**
**Summarizing – Load Shedding**

Semantic data streams

Heterogeneous and dynamic data streams

Heterogeneous and static data

facebook

R D F

RSS

sensors

*Fig. 1*

| |
|---|
| 1. ACQUIRING DATA FROM VARIOUS |

| |
|---|
| 2. INPUTTING DATA IN A DATABASE |

| |
|---|
| 3. CLASSIFYING BY MEANS OF SEMANTIC ANALYSIS |

| |
|---|
| 4. DATA ANALYSING AND REPORTS |

| |
|---|
| 3 A) SUBDIVIDING SENTENCES IN "TOKEN" |

| |
|---|
| 3 B) DEFINING AT LEAST A HYPERCUBE FOR DATA ANALYSIS |

| |
|---|
| 3 C) ASSIGNING A CELL OF HYPERCUBE TO EACH RECORD |

Fig. 2

Fig. 3

Europäisches
Patentamt

European
Patent Office

Office européen
des brevets

# EUROPEAN SEARCH REPORT

Application Number

EP 16 20 6672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 983 170 A (GOODMAN MARC I [US]) 9 November 1999 (1999-11-09) * abstract; figure 1 * * column 1, line 5 - column 10, line 35 * ----- | 1-7 | INV. G06Q30/02 |
| X | US 2013/080208 A1 (WANG JUN [US] ET AL) 28 March 2013 (2013-03-28) * abstract; figures 1-7 * * paragraph [0001] - paragraph [0002] * * paragraph [0011] - paragraph [0074] * ----- | 1-7 | |
| X | US 2005/027720 A1 (SCHMITT WINFRIED [DE]) 3 February 2005 (2005-02-03) * abstract; figures 1-4 * * paragraph [0002] - paragraph [0020] * * paragraph [0026] - paragraph [0061] * ----- | 5,6 | |

TECHNICAL FIELDS
SEARCHED     (IPC)

G06Q

The present search report has been drawn up for all claims

| Place of search | Date of completion of the search | Examiner |
|---|---|---|
| The Hague | 31 March 2017 | Fiorenzo Catalano, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 20 6672

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2017

| Patent document cited in search report | | Publication date | Patent family member(s) | | Publication date |
|---|---|---|---|---|---|
| US 5983170 | A | 09-11-1999 | NONE | | |
| US 2013080208 | A1 | 28-03-2013 | JP | 6040661 B2 | 07-12-2016 |
| | | | JP | 2013069285 A | 18-04-2013 |
| | | | US | 2013080208 A1 | 28-03-2013 |
| US 2005027720 | A1 | 03-02-2005 | EP | 1482419 A1 | 01-12-2004 |
| | | | EP | 1634192 A1 | 15-03-2006 |
| | | | US | 2005027720 A1 | 03-02-2005 |
| | | | WO | 2004107205 A1 | 09-12-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARIE-AUDE AUFAURE ; RAJA CHIKY ; OLIVIER CUR ; HOUDA KHROUF ; GABRIEL KEPEKLIAN.** From Business Intelligence to semantic data stream management. *Future Generation Computer Systems,* 2016, vol. 63, 100-107